# EUROPÄISCHE PATENTANMELDUNG

(11) **EP 4 134 650 A1**
(43) Veröffentlichungstag der Anmeldung: **15.02.2023**
(21) Anmeldenummer: 22187224.5
(22) Anmeldetag: 27.07.2022
(51) Int. Cl.: G01M 13/021, G01M 13/028

(54) **COMPUTERIMPLEMENTIERTES VERFAHREN, VORRICHTUNG, COMPUTERPROGRAMM UND COMPUTERLESBARES MEDIUM ZUM IDENTIFIZIEREN EINES ZAHNRADS, DAS IN EINEM GETRIEBE VIBRATIONEN HERVORRUFT**

(30) Priorität: 12.08.2021 DE 102021208836
(71) Anmelder: ZF Friedrichshafen AG, 88046 Friedrichshafen (DE)
(72) Erfinder: Martin, Tobias, 88046 Friedrichshafen (DE); Srelz, Dorian, 88046 Friedrichshafen (DE)

(57) **Zusammenfassung**

Dargestellt und beschrieben ist ein computerimplementiertes Verfahren zum Identifizieren eines Zahnrads (5), das in einem Getriebe Vibrationen hervorruft, wobei das Verfahren folgende Schritte umfasst: Trainieren eines generischen KI-Modells mithilfe eines Trainingsdatensatzes einer Gruppe von Referenzzahnrädern (19), wobei für jedes Referenzzahnrad (19) der Gruppe mindestens ein Referenzprofil der Oberfläche (21) des Referenzzahnrads (19) und eine Zahnradkategorie vorgesehen ist, wobei jedem Referenzzahnrad (19) der Gruppe, das in dem Getriebe eine Vibration gleich einer oder oberhalb der Vibrationsschwelle hervorruft, eine erste Zahnradkategorie (23) der Zahnradkategorien zugeordnet ist und jedem Referenzzahnrad (19), das in dem Getriebe eine Vibration unterhalb der Vibrationsschwelle hervorruft, eine zweite Zahnradkategorie (25) der Zahnradkategorien zugeordnet ist, wobei das trainierte KI-Modell jedem Zahnrad (5) eine Zahnradkategorie der Zahnradkategorien zuordnen kann; Erfassen eines Profils einer Oberfläche (11) eines Zahnrads (5); und Zuordnen einer der Zahnradkategorien zu dem Zahnrad (5) anhand des erfassten Profils durch das trainierte KI-Modell. Die Erfindung betrifft weiterhin eine entsprechende Vorrichtung, sowie ein entsprechendes Computerprogramm und ein entsprechendes computerlesbares Medium.

## Beschreibung

Die vorliegende Erfindung betrifft ein computerimplementiertes Verfahren, eine Vorrichtung, ein Computerprogramm und ein computerlesbares Medium zum Identifizieren eines Zahnrads, das in einem Getriebe Vibrationen hervorruft.

Verfahren zum Identifizieren eines Zahnrads, das in einem Getriebe Vibrationen hervorruft, sind aus dem Stand der Technik bekannt. Gewöhnlich werden Getriebe, insbesondere Zahnradgetriebe, so gefertigt, dass sie aus ihren Zahnrädern und weiteren Komponenten der Getriebe zusammengesetzt werden. Die gefertigten Getriebe werden dann häufig in einem sogenannten End-of-Line-Prüfschritt geprüft. In diesem Prüfschritt kann der Betrieb eines Getriebes durch einen Prüfstand simuliert werden indem das Getriebe in für den Betrieb typische Zustände verbracht wird. In den unterschiedlichen Zuständen können dann die durch die Komponenten des Getriebes hervorgerufenen Vibrationen gemessen und ausgewertet werden.

Wenn die gemessenen Vibrationen eines Getriebes gleich einem Schwellwert sind oder oberhalb dieses Schwellwerts liegen, kann dieses Getriebe nicht für den Einsatz freigegeben werden und es kann auch als fehlerhaftes Getriebe bezeichnet werden.

Generell ist es wünschenswert, die durchschnittliche Herstellungsdauer von Getrieben zu minimieren sowie den zeitlichen Aufwand für Fehleranalysen von Getrieben zu minimieren.

Es ist daher eine Aufgabe der vorliegenden Erfindung die durchschnittliche Herstellungsdauer von Getrieben zu minimieren sowie den zeitlichen Aufwand für Fehleranalysen von Getrieben zu minimieren.

Gemäß einem ersten Aspekt der Erfindung wird die genannte Aufgabe durch ein Computerimplementiertes Verfahren mit den Merkmalen des Patentanspruchs 1 gelöst. Das Verfahren ist zum Identifizieren eines Zahnrads vorgesehen, das in einem Getriebe Vibrationen hervorruft. Das Verfahren umfasst den folgenden Schritt: Trainieren eines generischen KI-Modells mithilfe eines Trainingsdatensatzes einer Gruppe von Referenzzahnrädern. Für jedes Referenzzahnrad der Gruppe ist mindestens ein Referenzprofil der Oberfläche des Referenzzahnrads und eine Zahnradkategorie vorgesehen. Jedem Referenzzahnrad der Gruppe, das in dem Getriebe eine Vibration gleich einer oder oberhalb der Vibrationsschwelle hervorruft, ist eine erste Zahnradkategorie der Zahnradkategorien zugeordnet. Jedem Referenzzahnrad, das in dem Getriebe eine Vibration unterhalb der Vibrationsschwelle hervorruft, ist eine zweite Zahnradkategorie der Zahnradkategorien zugeordnet. Das trainierte KI-Modell kann jedem Zahnrad eine Zahnradkategorie der Zahnradkategorien zuordnen. Weiter umfasst das Verfahren den folgenden Schritt: Erfassen eines Profils einer Oberfläche eines Zahnrads. Weiter umfasst das Verfahren den folgenden Schritt: Zuordnen einer der Zahnradkategorien zu dem Zahnrad anhand des erfassten Profils durch das trainierte KI-Modell.

Das Verfahren ist zum Identifizieren eines Zahnrads vorgesehen, das in einem Getriebe Vibrationen hervorruft. Insbesondere ist das Verfahren geeignet, um ein Zahnrad zu identifizieren, das in dem Getriebe eine Vibration hervorruft, die gleich einer oder oberhalb der Vibrationsschwelle liegt. Bevorzugt ist die Vibrationsschwelle ein Schwellwert, ab dem das Getriebe nicht für den Einsatz freigegeben werden kann. Insbesondere ist das Verfahren dafür vorgesehen aus einer Gruppe von Zahnrädern diejenigen Zahnräder zu identifizieren, die in dem Getriebe, für das sie vorgesehen sind, eine Vibration hervorrufen, die gleich der oder oberhalb der Vibrationsschwelle liegt. Das Verfahren ist vorgesehen, um ein Zahnrad zu identifizieren, das beispielsweise ein Stirnrad oder ein Kegelrad sein kann. Das Verfahren ist ebenfalls für andere Arten von Zahnrädern anwendbar.

Das Verfahren umfasst Trainieren des generischen KI-Modells mithilfe des Trainingsdatensatzes der Gruppe von Referenzzahnrädern. Das generische KI-Modell kann auch als generisches Künstliche-Intelligenz-Modell bezeichnet werden. Das KI-Modell kann beispielsweise auf Ansätzen des maschinellen Lernens beruhen. Beispielsweise kann das KI-Modell auf Ansätzen des Deep Learnings unter der Verwendung von neuronalen Netzwerken beruhen. Bevorzugt basiert das KI-Modell auf einem der folgenden Klassifikatoren: Naive Bayes Klassifikator, ein auf logistischer Regression basierender Klassifikator, eine lineare Support Vector Machine (SVM), eine nichtlineare SVM, ein auf ein neuronales Netzwerk basierender Klassifikator, ein auf ein künstliches neuronales Netzwerk basierender Klassifikator, ein auf einem Entscheidungsbaum basierender Klassifikator, oder ein auf einem Random Forest basierender Klassifikator. Testreihen haben ergeben, dass das KI-Modell, wenn dieses auf dem Klassifikator basiert, der auf dem neuronalen Netzwerk basiert, besonders präzise vorhersagen kann, welches Zahnrad in dem Getriebe eine Vibration gleich der oder oberhalb der Vibrationsschwelle hervorruft. Weiter haben diese Testreihen ergeben, dass das KI-Modell, wenn dieses auf dem Klassifikator basiert, der auf dem Random Forest basiert, ebenfalls sehr präzise vorhersagen kann, welches Zahnrad in dem Getriebe eine Vibration gleich der oder oberhalb der Vibrationsschwelle hervorruft.

Für jedes Referenzzahnrad der Gruppe ist mindestens ein Referenzprofil der Oberfläche des Referenzzahnrads und eine Zahnradkategorie vorgesehen. Insbesondere weist der Trainingsdatensatz für jedes Referenzzahnrad der Gruppe das mindestens eine Referenzprofil der Oberfläche des Referenzzahnrads und die Zahnradkategorie auf. Beispielsweise ist für jedes Referenzzahnrad der Gruppe genau ein Referenzprofil der Oberfläche des Referenzzahnrads vorgesehen. Alternativ können für jedes Referenzzahnrad zwei Referenzprofil der Oberfläche des Referenzzahnrad vorgesehen sein. Wenn für jedes Referenzzahnrad zwei Referenzprofile der Oberfläche des Referenzzahnrad vorgesehen sind, ist es bevorzugt, dass die beiden Referenzprofile die Profile eines Zahns des Referenzzahnrads sind. Beispielsweise können auch für jedes Referenzzahnrad vier, sechs, acht, oder zehn Referenzprofile der Oberfläche des Referenzzahnrads vorgesehen sein. In diesen Fällen ist bevorzugt vorgesehen, dass jeweils zwei Referenzprofile die Profile eines Zahns des Referenzzahnrad sind. Für den Fall, dass acht Referenzprofile vorgesehen sind, sind bevorzugt zwei Referenzprofile die Profile eines ersten Zahns, zwei weitere Referenzprofile die Profile eines zweiten Zahns, wiederum zwei weitere Referenzprofile die Profile eines Dritten Zahns und schließlich die letzten zwei Referenzprofile die Profile eines vierten Zahns.

Jedem Referenzzahnrad der Gruppe, das in dem Getriebe eine Vibration gleich der oder oberhalb der Vibrationsschwelle hervorruft, ist die erste Zahnradkategorie der Zahnradkategorien zugeordnet. Jedem Referenzzahnrad, das in dem Getriebe eine Vibration unterhalb der Vibrationsschwelle hervorruft, ist die zweite Zahnradkategorie der Zahnradkategorien zugeordnet. Bevorzugt ist die Vibrationsschwelle ein Schwellwert, ab dem das Getriebe nicht für den Einsatz freigegeben werden kann. Jedem Referenzzahnrad ist somit entweder die erste Zahnradkategorie oder die zweite Zahnradkategorie zugeordnet. Mithilfe der ersten und zweiten Zahnradkategorie sind die Referenzzahnräder in zwei Kategorien eingeteilt. Mithilfe der ersten und zweiten Zahnradkategorie kann auch jedes Zahnrad, das mithilfe des trainierten KI-Modells anhand seines Profils bewertet wird, in eine der zwei Kategorien eingeteilt werden. Jedes Referenzzahnrad, das der ersten Zahnradkategorie zugeordnet ist, kann auch als fehlerhaftes Referenzzahnrad bezeichnet werden. Jedes Referenzzahnrad, das der zweiten Zahnradkategorie zugeordnet ist, kann auch als fehlerfreies Referenzzahnrad bezeichnet werden. Jedes Referenzzahnrad, das in dem Getriebe eine Vibration unterhalb der Vibrationsschwelle hervorruft, wird auch dann der zweiten Zahnradkategorie zugeordnet, wenn dieses Referenzzahnrad keine Vibration in dem Getriebe hervorruft. Jede Zahnradkategorie kann auch als Zahnradklasse bezeichnet werden.

Bevorzugt weist die erste Zahnradkategorie eine Unterkategorien auf. Beispielsweise weist die erste Zahnradkategorie eine erste Unterkategorie und eine zweite Unterkategorie auf. Jede Unterkategorie der Unterkategorien kann einem konkreten Fehler des Referenzzahnrads zugeordnet sein. Beispielsweise kann die erste Unterkategorie jedem Referenzzahnrad zugeordnet sein, dessen Rauheit oberhalb einer Rauheitsschwelle ist. Beispielsweise kann die zweite Unterkategorie jedem Referenzzahnrad zugeordnet sein, dessen Welligkeit oberhalb einer Welligkeitsschwelle ist. Weitere Unterkategorien können jedem Referenzzahnrad zugeordnet sein, dessen Oberfläche einen bestimmten Defekt aufweist. Beispielsweise kann eine dritte Unterkategorie vorgesehen sein, die jedem Referenzzahnrad zugeordnet ist, dessen Oberfläche aufgrund eines Schleifscheibenbruches beschädigt ist. Mithilfe der Unterkategorien können jedem Referenzzahnrad mindestens eine Fehlerklasse von unterschiedlichen Fehlerklassen zugeordnet sein, wobei jede Unterkategorie einer Fehlerklasse entspricht. Bevorzugt kann jedem Referenzzahnrad dann mindestens eine Unterkategorie zugeordnet sein, wenn dem entsprechenden Referenzzahnrad die erste Zahnradkategorie zugeordnet ist. Bevorzugt weist der Trainingsdatensatz für jedes Referenzzahnrad das mindestens eine Referenzprofil, eine der beiden Zahnradkategorien sowie gegebenenfalls eine oder mehrere Unterkategorien auf.

Das trainierte KI-Modell kann jedem Zahnrad eine Zahnradkategorie der Zahnradkategorien zuordnen. Insbesondere kann das trainierte KI-Modell jedem Zahnrad, das kein Referenzzahnrad ist, eine Zahnradkategorie der Zahnradkategorien zuordnen. Dadurch, dass das trainierte KI-Modell jedem Zahnrad eine Zahnradkategorie zuordnen kann, kann das trainierte KI-Modell jedes Zahnrad in eine der zwei Kategorien einteilen. Jedes Zahnrad, das der ersten Zahnradkategorie zugeordnet ist, kann auch als fehlerhaftes Zahnrad bezeichnet werden. Jedes Zahnrad, das der zweiten Zahnradkategorie zugeordnet ist, kann auch als fehlerfreies Zahnrad bezeichnet werden. Bevorzugt entspricht die Art des Zahnrads der Art der Referenzzahnräder. Beispielsweise sind dann, wenn das Zahnrad ein Stirnrad ist, die Referenzzahnräder Stirnräder. Alternativ ist bevorzugt, dass dann, wenn das Zahnrad ein Kegelrad ist, die Referenzzahnräder Kegelräder sind. Insbesondere ist bevorzugt, dass das Zahnrad und die Referenzzahnräder baugleich sind.

Weiter umfasst das Verfahren den folgenden Schritt: Erfassen des Profils der Oberfläche des Zahnrads. Das Profil der Oberfläche des Zahnrad kann erfasst werden, indem das Profil der Oberfläche des Zahnrad gemessen wird. Alternativ kann das Profil der Oberfläche des Zahnrad erfasst werden, indem das Profil der Oberfläche eingelesen wird. Beispielsweise kann das Profil in elektronischer Form in einem Datenspeicher gespeichert sein und können von dem Datenspeicher durch einen Prozessor eingelesen werden. Alternativ kann das Profil auf Papier ausgedruckt vorliegen. Das ausgedruckte Profil kann von einer Scanvorrichtung optisch erfasst werden. Das optisch erfasste Profil kann in dem Datenspeicher gespeichert werden und anschließend von dem Prozessor eingelesen werden. Insbesondere ist vorgesehen, dass mindestens ein Profil der Oberfläche des Zahnrads erfasst wird. Beispielsweise können zwei oder mehr Profile der Oberfläche des Zahnrad erfasst werden. Insbesondere entspricht die Anzahl der erfassten Profile der Oberfläche des Zahnrads der Anzahl der Referenzprofile jedes Referenzzahnrads. Bevorzugt wird für das Zahnrad das Profil oder die Profile analog zu dem Referenzprofil oder den Referenzprofilen gemessen. Wenn mehrere Profile der Oberfläche des Zahnrads erfasst werden, können diese Profile unterschiedlichen Zähnen des Zahnrad zugeordnet sein. Beispielsweise können zwei, vier, sechs, acht, oder zehn Profile der Oberfläche des Zahnrads vorgesehen sein. In diesen Fällen ist bevorzugt vorgesehen, dass jeweils zwei Profile die Profile desselben Zahns des Zahnrads sind. Beispielsweise für den Fall, dass zwei Profile der Oberfläche des Zahnrads vorgesehen sind, ist es bevorzugt, dass die beiden Profile die Profile desselben Zahns des Zahnrads sind. Für den beispielhaften Fall, dass acht Profile vorgesehen sind, sind bevorzugt zwei Profile die Profile eines ersten Zahns des Zahnrads, zwei weitere Profile die Profile eines zweiten Zahns des Zahnrads, wiederum zwei weitere Profile die Profile eines Dritten Zahns des Zahnrads und schließlich die letzten zwei Profile die Profile eines vierten Zahns des Zahnrads.

Weiter umfasst das Verfahren den folgenden Schritt: Zuordnen einer der Zahnradkategorien zu dem Zahnrad anhand des erfassten Profils durch das trainierte KI-Modell. Insbesondere ist vorgesehen, dass für den Fall, dass mehrere Profile des Zahnrads erfasst werden, dass eine der Zahnradkategorien dem Zahnrad anhand der mehreren erfassten Profile durch das trainierte KI-Modell zugeordnet werden. Anhand des erfassten Profils oder der erfassten Profile wird dem Zahnrad durch das trainierte KI-Modell eine Zahnradkategorie der Zahnradkategorien zugeordnet. Anhand der dem Zahnrad zugeordneten Zahnradkategorie kann geschlussfolgert werden, ob das Zahnrad fehlerfrei ist. Insbesondere dann, wenn dem Zahnrad die erste Zahnradkategorie zugeordnet wird, kann geschlussfolgert werden, dass das Zahnrad in dem Getriebe eine Vibration gleich einer oder oberhalb der Vibrationsschwelle hervorrufen wird, wenn es in das Getriebe eingebaut wird. Ebenso kann dann, wenn dem Zahnrad die zweite Zahnradkategorie zugeordnet wird, geschlussfolgert werden, dass das Zahnrad in dem Getriebe eine Vibration unterhalb der Vibrationsschwelle hervorrufen wird, wenn es in das Getriebe eingebaut wird.

Bevorzugt wendet das KI-Model eine Bewertungsfunktion auf das erfasste Profil oder auf die erfassten Profile des Zahnrads an und wendet eine Entscheidungsfunktion auf das Ergebnis der Bewertungsfunktion an, um zu bestimmen, welche Zahnradkategorie dem Zahnrad zugeordnet wird. Beispielsweise weist das erfasste Profil oder jedes erfasste Profil des Zahnrads eine Interpolation von 480 Messpunkten auf. Die Bewertungsfunktion kann ein Maß für eine Abweichung der 480 Messpunkte von einem Mittelwert der 480 Messpunkte oder ein Maß für eine Abweichung der Interpolation an vorgegebenen Punkten entlang der Interpolation von einem Mittelwert der Interpolation an den vorgegebenen Punkten sein. Ein Maß kann beispielsweise die Stichprobenvarianz sein. Die Entscheidungsfunktion kann einen kritischen Wert definieren, wobei anhand des kritischen Werts entschieden wird, dass das Profil des Zahnrads ein geeignetes Profil ist, wenn das Maß für die Abweichung kleiner als der kritische Wert ist und anhand des kritischen Werts entschieden wird, dass das Profil des Zahnrads ein nicht geeignetes Profil ist, wenn das Maß für die Abweichung gleich dem kritischen Wert ist oder größer als der kritische Wert ist. Wenn das Maß für die Abweichung gleich dem kritischen Wert ist oder größer als der kritische Wert ist, wird dem Zahnrad die erste Zahnradkategorie zugeordnet. Wenn das Maß für die Abweichung kleiner als der kritische Wert ist, wird dem Zahnrad die zweite Zahnradkategorie zugeordnet. Hierbei liegt dem KI-Modell die Annahme zugrunde, dass ein theoretisch optimaler kritischer Wert für die Stichprobenvarianz existiert, sodass das Profil des Zahnrads ein geeignetes Profil ist, wenn das Maß für die Abweichung kleiner als der theoretisch optimale kritische Wert ist und das Profil des Zahnrads ein nicht geeignetes Profil ist, wenn das Maß für die Abweichung gleich dem theoretisch optimalen kritischen Wert ist oder größer als der theoretisch optimale kritische Wert ist. Durch Erhöhen der Anzahl der Referenzzahnräder für den Trainingsdatensatz kann dieser theoretisch optimale kritische Wert immer präziser bestimmt und durch den kritischen Wert angenähert werden. Weiter bevorzugt kann ein Fehlerparameter zur Berücksichtigung einer Fehlertoleranz vorgesehen sein. Das Maß für die Abweichung und der negative Fehlerparameter können addiert werden und es kann entschieden werden, dass das Profil des Zahnrads ein geeignetes Profil ist, wenn diese Summe kleiner als der kritische Wert ist und, dass das Profil des Zahnrads ein nicht geeignetes Profil ist, wenn diese Summe gleich dem kritischen Wert ist oder größer als der kritische Wert ist. Mit zunehmenden Referenzzahnrädern kann die statistische Zuverlässigkeit des KI-Modells verbessert werden und der Betrag des Fehlerparameters reduziert werden.

Da das generische KI-Modell mithilfe eines Trainingsdatensatzes trainiert wird, der Referenzprofile und Zahnradkategorien umfasst und das trainierte KI-Modell dem Zahnrad anhand des erfassten Profils des Zahnrads eine Zahnradkategorie zuordnet, geht das vorliegende Verfahren über die aus dem Stand der Technik bekannten Prüfverfahren zur Prüfung von Zahnrädern hinaus, bei denen die Zahnräder beispielsweise geometrisch vermessen werden und gemessene Ist-Werte mit vorgegebenen Soll-Werten verglichen werden und ein Zahnrad dann für fehlerfrei befunden wird, wenn die Ist-Werte innerhalb vorgegebener Toleranzen den Soll-Werten entsprechen und ein Zahnrad dann für fehlerhaft befunden wird, wenn die Ist-Werte stärker als die vorgegebenen Toleranzen von den Soll-Werten abweichen. Versuchsreihen mit dem trainierten KI-Modell haben zu dem überraschenden Ergebnis geführt, dass mithilfe der Zuordnung der Zahnradkategorie zu dem Zahnrad durch das trainierte KI-Modell wesentlich zuverlässigere Aussagen über den Zustand des Zahnrads getroffen werden können als dies mit den aus dem Stand der Technik bekannten Prüfverfahren von Zahnrädern der Fall ist. Insbesondere konnten mithilfe des trainierten KI-Modells zuverlässig Zahnräder identifiziert werden, die in dem Getriebe eine Vibration gleich einer oder oberhalb der Vibrationsschwelle hervorrufen bevor diese Zahnräder in das Getriebe eingebaut wurden. Die zuverlässige Identifikation von solchen Zahnrädern reduziert die durchschnittliche Herstellungsdauer von Getrieben, da die Wahrscheinlichkeit einer durch ein Zahnrad hervorgerufenen Vibration gleich der oder oberhalb der Vibrationsschwelle deutlich reduziert werden kann, da die als fehlerhaft identifizierten Zahnräder nicht in das Getriebe eingebaut werden und somit die Anzahl der Getriebe in einer Gruppe mit einer festen Anzahl von Getrieben erhöht werden kann, die nicht durch ein fehlerhaftes Zahnrad selbst fehlerhaft sind. Außerdem gewährleistet die zuverlässige Identifikation von fehlerhaften Zahnrädern, dass durch fehlerhafte Zahnräder hervorgerufene Fehleranalysen von Getrieben vermieden werden oder zumindest die Häufigkeit deren Vorkommens deutlich reduziert werden kann.

Mit anderen Worten kann mithilfe des erfindungsgemäßen Verfahrens jedes Zahnrad in eine erste Klasse oder eine zweite Klasse eingeteilt werden und aufgrund dieser Einteilung kann geschlussfolgert werden, dass das Zahnrad entweder fehlerhaft ist, nämlich dann, wenn es in die erste Klasse eingeteilt wurde, oder fehlerfrei ist, nämlich dann, wenn es in die zweite Klasse eingeteilt wurde. Diese Schlussfolgerung wird durch das KI-Modell getroffen und ermöglicht die Zahnräder zu identifizieren die aufgrund ihres erfassten Profils aller Voraussicht nach in dem Getriebe einen Getriebefehler verursachen würden. Diese so identifizierten Zahnräder können somit aussortiert werden, bevor diese in das Getriebe eingebaut werden. Dies führt zu einer verringerten durchschnittlichen Fertigungszeit von Getrieben und zur Reduzierung der Anzahl notwendiger Fehleranalysen von Getrieben. Weiter führt das Verfahren zur Beschleunigung von Fehleranalysen von Getrieben, da sich in der Fehleranalyse auf Fehler konzentriert werden kann, die nicht von Zahnrädern verursacht werden.

Zusammenfassend kann also festgestellt werden, dass die durchschnittliche Herstellungsdauer von Getrieben und der zeitlichen Aufwand für Fehleranalysen von Getrieben minimiert werden.

In einer Ausführungsform umfasst das Verfahren folgende Schritte: Erzeugen des Trainingsdatensatzes, wobei das Erzeugen des Trainingsdatensatzes für jedes Referenzzahnrad folgende Schritte umfasst: Erfassen des Referenzprofils der Oberfläche des Referenzzahnrades; und Bestimmen der Zahnradkategorie. Bevorzugt wird für jedes Referenzzahnrad ein Referenzprofil der Oberfläche des Referenzzahnrades durch Messen des Referenzprofils erfasst. Alternativ kann für jedes Referenzzahnrad eine andere Anzahl von Referenzprofilen erfasst, insbesondere gemessen, werden. Beispielsweise können zwei, vier, sechs oder acht Referenzprofile für jedes Referenzzahnrad erfasst, insbesondere gemessen, werden, wobei für jeden Zahn von vier Zähnen des Referenzzahnrads jeweils zwei der Referenzprofile erfasst, insbesondere gemessen werden. Alternativ zum Messen des Referenzprofils für jedes Referenzzahnrad, kann das Referenzprofil für jedes Referenzzahnrad auf eine andere Weise erfasst werden. Beispielsweise kann das Referenzprofil für jedes Referenzzahnrad eingelesen werden. Bevorzugt sind die Referenzprofile in elektronischer Form in einem Datenspeicher gespeichert und werden von diesem durch einen Prozessor eingelesen. Weiter können die Referenzprofile auf Papier ausgedruckt vorliegen. Die ausgedruckten Referenzprofile können von einer Scanvorrichtung optisch erfasst werden und die optisch erfassten Referenzprofile können in elektronischer Form in dem Datenspeicher gespeichert werden. Bevorzugt wird die Zahnradkategorie jedes Referenzzahnrad bestimmt, indem jedes Referenzzahnrad in das für das Referenzzahnrad vorgesehene Getriebe eingebaut wird und die durch das Referenzzahnrad hervorgerufene Vibration, insbesondere sensorisch, erfasst wird und die Vibration mit der Vibrationsschwelle verglichen wird. Wenn die erfasste Vibration, die durch das Referenzzahnrad hervorgerufen wird, gleich der oder oberhalb der Vibrationsschwelle liegt, wird dem Referenzzahnrad die erste Zahnradkategorie zugeordnet. Wenn die erfasste Vibration, die durch das Referenzzahnrad hervorgerufen wird, unterhalb der Vibrationsschwelle liegt, wird dem Referenzzahnrad die zweite Zahnradkategorie zugeordnet.

In einer Ausführungsform umfasst das Erfassen des Profils der Oberfläche des Zahnrads: Erfassen des Profils der Oberfläche des Zahnrads entlang einer Zahnflanke eines Zahns des Zahnrads. Bevorzugt umfasst der Trainingsdatensatz für jedes Referenzzahnrad ein Referenzprofil der Oberfläche des Referenzzahnrads, das entlang einer Zahnflanke eines Zahns des Referenzzahnrads erfasst wurde, wenn das Profil der Oberfläche des Zahnrads entlang der Zahnflanke des Zahns des Zahnrads erfasst wird. Testreihen haben ergeben, dass hierdurch das KI-Modell besonders präzise vorhersagen kann, welches Zahnrad in dem Getriebe eine Vibration gleich der oder oberhalb der Vibrationsschwelle hervorruft.

In einer Ausführungsform umfasst das Erfassen des Profils der Oberfläche des Zahnrads: Erfassen des Profils der Oberfläche des Zahnrads entlang einer sich im Wesentlichen senkrecht zur Drehachse des Zahnrads erstreckenden Bahn. Bevorzugt umfasst der Trainingsdatensatz für jedes Referenzzahnrad ein Referenzprofil der Oberfläche des Referenzzahnrads, das entlang einer sich im Wesentlichen senkrecht zur Drehachse des Referenzzahnrads erstreckenden Bahn erfasst wurde, wenn das Profil der Oberfläche des Zahnrads entlang der sich im Wesentlichen senkrecht zur Drehachse des Zahnrads erstreckenden Bahn erstreckt. Testreihen haben ergeben, dass hierdurch das KI-Modell besonders präzise vorher-sagen kann, welches Zahnrad in dem Getriebe eine Vibration gleich der oder ober-halb der Vibrationsschwelle hervorruft.

In einer Ausführungsform umfasst das Erfassen des Profils der Oberfläche des Zahnrads: Erfassen des Profils der Oberfläche des Zahnrads entlang einer sich im Wesentlichen parallel zur Drehachse des Zahnrads erstreckenden Bahn. Bevorzugt umfasst der Trainingsdatensatz für jedes Referenzzahnrad ein Referenzprofil der Oberfläche des Referenzzahnrads, das entlang einer sich im Wesentlichen parallel zur Drehachse des Referenzzahnrads erstreckenden Bahn erfasst wurde, wenn das Profil der Oberfläche des Zahnrads entlang der sich im Wesentlichen parallel zur Drehachse des Zahnrads erstreckenden Bahn erstreckt. Testreihen haben ergeben, dass hierdurch das KI-Modell besonders präzise vorhersagen kann, welches Zahnrad in dem Getriebe eine Vibration gleich der oder oberhalb der Vibrationsschwelle hervorruft.

Auch wenn die Verfahrensschritte in einer bestimmten Reihenfolge beschrieben werden, ist die vorliegende Erfindung nicht auf diese Reihenfolge beschränkt. Vielmehr können die einzelnen Verfahrensschritte in beliebiger sinnvoller Reihenfolge, insbesondere auch zumindest abschnittsweise zeitlich parallel zueinander, durchgeführt werden.

Gemäß einem zweiten Aspekt der Erfindung wird die eingangs genannte Aufgabe durch eine Vorrichtung mit den Merkmalen des Patentanspruchs 6 gelöst. Die Vorrichtung ist zum Identifizieren eines Zahnrads vorgesehen, das in einem Getriebe Vibrationen hervorruft mit Mitteln, die angepasst sind, die Schritte des Verfahrens nach dem ersten Aspekt der Erfindung auszuführen. Bevorzugt weist die Vorrichtung eine Haltevorrichtung für ein Zahnrad auf, die in das Zahnrad eingreift und dieses um seine Drehachse bewegen kann. Bevorzugt ist die Haltevorrichtung ausgebildet in jedes der Referenzzahnräder nacheinander einzugreifen und diese um ihre Drehachse zu bewegen. Die Vorrichtung weist beispielsweise eine Tastvorrichtung mit einem Taster auf. Die Tastvorrichtung ist bevorzugt so einstellbar, dass der Taster mit seinem freien Ende mit einer Oberfläche des Zahnrands oder mit einer Oberfläche eines Referenzzahnrads in Kontakt gebracht werden kann. Während das freie Ende des Tasters mit der Oberfläche in Kontakt ist, kann das freie Ende bevorzugt entlang einer Bahn über die Oberfläche des Zahnrads oder des Referenzzahnrads bewegt werden. Dadurch, dass das freie Ende mit der Oberfläche in Kontakt gebracht werden kann und entlang der Bahn über die Oberfläche bewegt werden kann, kann mithilfe des freien Endes ein Profil der Oberfläche des Zahnrads oder des Referenzzahnrads gemessen werden.

Bevorzugt weist die Vorrichtung einen Prozessor, einen Datenspeicher und eine Scanvorrichtung auf. Die Vorrichtung ist zum Identifizieren eines Zahnrads ausgebildet, das in einem Getriebe Vibrationen hervorruft. Die Haltevorrichtung, die Tastvorrichtung, der Taster, der Prozessor, der Datenspeicher und die Scanvorrichtung können auch als Mittel der Vorrichtung bezeichnet werden. Die Mittel sind angepasst, die Schritte einer Ausführungsform eines erfindungsgemäßen computerimplementierten Verfahrens auszuführen.

Die im Zusammenhang mit dem Verfahren gemäß dem ersten Aspekt der Erfindung beschriebenen Merkmale, technischen Effekte und/oder Vorteile gelten zumindest in analoger Weise auch für die Vorrichtung gemäß dem zweiten Aspekt der Erfindung, sodass an dieser Stelle auf eine entsprechende Wiederholung verzichtet wird.

Gemäß einem dritten Aspekt der Erfindung wird die eingangs genannte Aufgabe durch ein Computerprogramm mit den Merkmalen des Patentanspruchs 7 gelöst. Das Computerprogramm umfasst Befehle, die bewirken, dass die Vorrichtung nach dem zweiten Aspekt der Erfindung die Schritte des Verfahrens nach dem ersten Aspekt der Erfindung ausführt. Das Computerprogramm kann auf dem Datenspeicher der Vorrichtung nach dem zweiten Aspekt gespeichert sein. Der Datenspeicher bildet ein Beispiel eines computerlesbaren Mediums. Die Befehle des Computerprogramms können durch den Prozessor ausgeführt werden.

Die im Zusammenhang mit dem Verfahren gemäß dem ersten Aspekt der Erfindung und die im Zusammenhang mit der Vorrichtung gemäß dem zweiten Aspekt der Erfindung beschriebenen Merkmale, technischen Effekte und/oder Vorteile gelten zumindest in analoger Weise auch für das Computerprogramm gemäß dem dritten Aspekt der Erfindung, sodass an dieser Stelle auf eine entsprechende Wiederholung verzichtet wird.

Gemäß einem vierten Aspekt der Erfindung wird die eingangs genannte Aufgabe durch ein computerlesbares Medium mit den Merkmalen des Patentanspruchs 8 gelöst. Auf dem computerlesbaren Medium ist das Computerprogramm nach dem dritten Aspekt der Erfindung gespeichert. Das computerlesbare Medium kann einen Datenspeicher aufweisen, insbesondere einen Datenspeicher der Vorrichtung nach dem zweiten Aspekt der Erfindung.

Die im Zusammenhang mit dem Verfahren gemäß dem ersten Aspekt der Erfindung, die im Zusammenhang mit der Vorrichtung gemäß dem zweiten Aspekt der Erfindung und die im Zusammenhang mit dem Computerprogramm gemäß dem dritten Aspekt der Erfindung beschriebenen Merkmale, technischen Effekte und/oder Vorteile gelten zumindest in analoger Weise auch für das computerlesbares Medium gemäß dem vierten Aspekt der Erfindung, sodass an dieser Stelle auf eine entsprechende Wiederholung verzichtet wird.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine schematische Darstellung einer Ausführungsform einer erfindungsgemäßen Vorrichtung.
- Figur 2: zeigt eine schematische Darstellung einer Gruppe von Referenzzahnrädern.
- Figur 3: zeigt eine schematische Darstellung von acht Referenzprofilen.
- Figur 4: zeigt eine schematische Darstellung eines Referenzzahnrads.

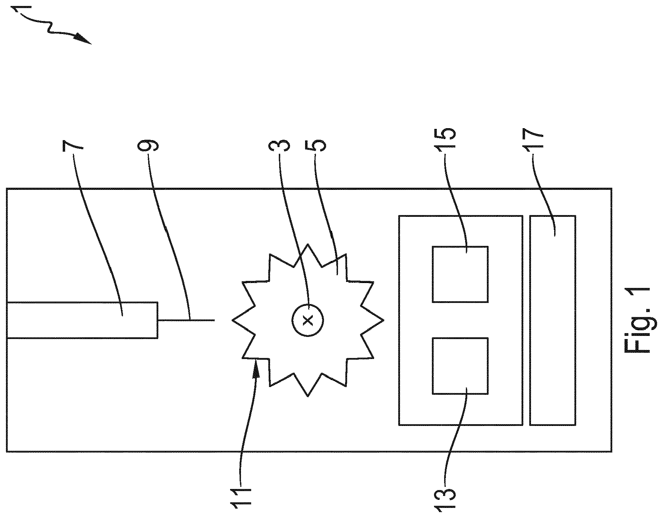

Figur 1 zeigt eine schematische Darstellung einer Ausführungsform einer erfindungsgemäßen Vorrichtung 1. Die Vorrichtung 1 weist eine Haltevorrichtung 3 für ein Zahnrad 5 auf, die in das Zahnrad 5 eingreift und dieses um seine Drehachse bewegen kann. Die Drehachse ist als "X" dargestellt. Die Vorrichtung 1 weist eine Tastvorrichtung 7 mit einem Taster 9 auf. Die Tastvorrichtung 7 ist so einstellbar, dass der Taster 9 mit seinem freien Ende mit einer Oberfläche 11 des Zahnrands 5 in Kontakt gebracht werden kann. Während das freie Ende des Tasters 9 mit der Oberfläche 11 in Kontakt ist, kann das freie Ende entlang einer Bahn über die Oberfläche 11 bewegt werden. Durch das in Kontakt bringen und entlang der Bahn über die Oberfläche bewegen des freien Endes kann ein Profil der Oberfläche 11 des Zahnrads 5 gemessen werden.

Die Vorrichtung 1 weist außerdem einen Prozessor 13, einen Datenspeicher 15 und eine Scanvorrichtung 17 auf. Die Vorrichtung 1 ist zum Identifizieren eines Zahnrads 5 ausgebildet, das in einem Getriebe Vibrationen hervorruft. Die Haltevorrichtung 3, die Tastvorrichtung 7, der Taster 9, der Prozessor 13, der Datenspeicher 15 und die Scanvorrichtung 17 können auch als Mittel der Vorrichtung 1 bezeichnet werden. Die Mittel sind angepasst, die Schritte einer Ausführungsform eines erfindungsgemäßen computerimplementierten Verfahrens auszuführen. Ein Computerprogramm, das Befehle umfasst, die bewirken, dass die Vorrichtung 1 die Schritte des Verfahrens ausführt, ist auf dem Datenspeicher 15 gespeichert. Der Datenspeicher 15 bildet ein Beispiel eines computerlesbaren Mediums. Die Befehle des Computerprogramms können durch den Prozessor 13 ausgeführt werden.

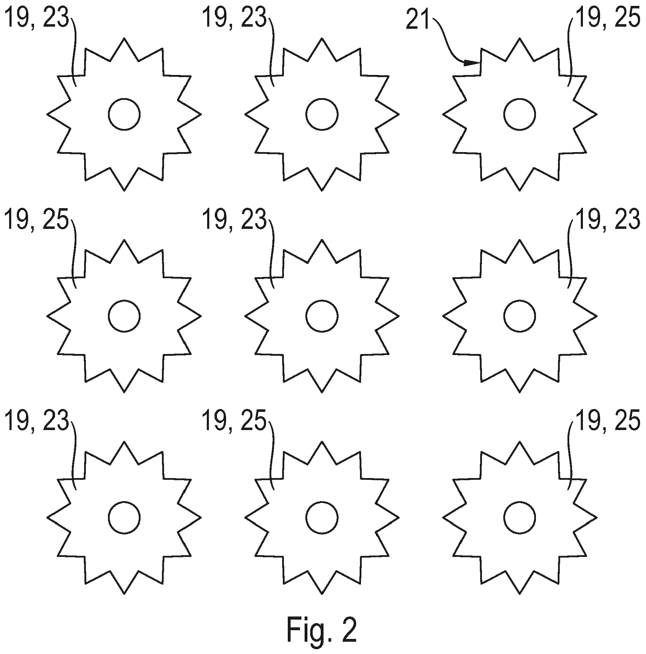

Figur 2 zeigt eine schematische Darstellung einer beispielhaften Gruppe von Referenzzahnrädern 19. Jedes Referenzzahnrad 19 weist eine Oberfläche 21 auf. Für jedes Referenzzahnrad 19 ist entweder eine erste Zahnradkategorie 23 oder eine zweite Zahnradkategorie 25 vorgesehen. Jedem Referenzzahnrad 19 der Gruppe, das in dem Getriebe eine Vibration gleich einer oder oberhalb der Vibrationsschwelle hervorruft, ist die erste Zahnradkategorie 23 der Zahnradkategorien zugeordnet. Jedem Referenzzahnrad 19, das in dem Getriebe eine Vibration unterhalb der Vibrationsschwelle hervorruft, ist die zweite Zahnradkategorie 25 der Zahnradkategorien zugeordnet.

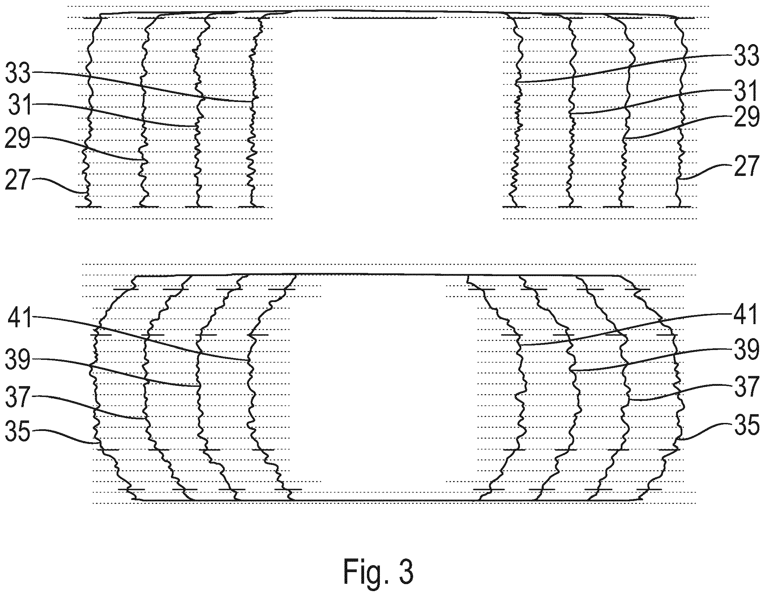

Figur 3 zeigt eine schematische Darstellung von acht Referenzprofilen der Oberflächen 21 von vier Referenzzahnrädern 19 der Gruppe von Referenzzahnrädern 19 in Figur 2. Die acht Referenzprofile weisen ein erstes Referenzprofil 27, ein zweites Referenzprofil 29, ein drittes Referenzprofil 31, ein viertes Referenzprofil 33, ein fünftes Referenzprofil 35, ein sechstes Referenzprofil 37, ein siebtes Referenzprofil 39 und ein achtes Referenzprofil 41 auf. Das erste Referenzprofil 27 und das fünfte Referenzprofil 35 sind einem ersten Referenzzahnrad 19 der Gruppe von Referenzzahnrädern 19 zugeordnet, das zweite Referenzprofil 29 und das sechste Referenzprofil 37 sind einem zweiten Referenzzahnrad 19 der Gruppe von Referenzzahnrädern 19 zugeordnet, das dritte Referenzprofil 31 und das siebte Referenzprofil 39 sind einem dritten Referenzzahnrad 19 der Gruppe von Referenzzahnrädern 19 zugeordnet, und das vierte Referenzprofil 33 und das achte Referenzprofil 41 sind einem vierten Referenzzahnrad 19 der Gruppe von Referenzzahnrädern 19 zugeordnet. Die acht Referenzprofile sind lediglich beispielhaft dargestellt und es sind für jedes Referenzzahnrad 19 der Gruppe von Referenzzahnrädern 19 zwei Referenzprofile der Oberfläche 21 des entsprechenden Referenzzahnrads 19 vorgesehen. Alternativ können auch für jedes Referenzzahnrad 19 der Gruppe von Referenzzahnrädern 19 acht Referenzprofile der Oberfläche 21 des entsprechenden Referenzzahnrads 19 vorgesehen sein.

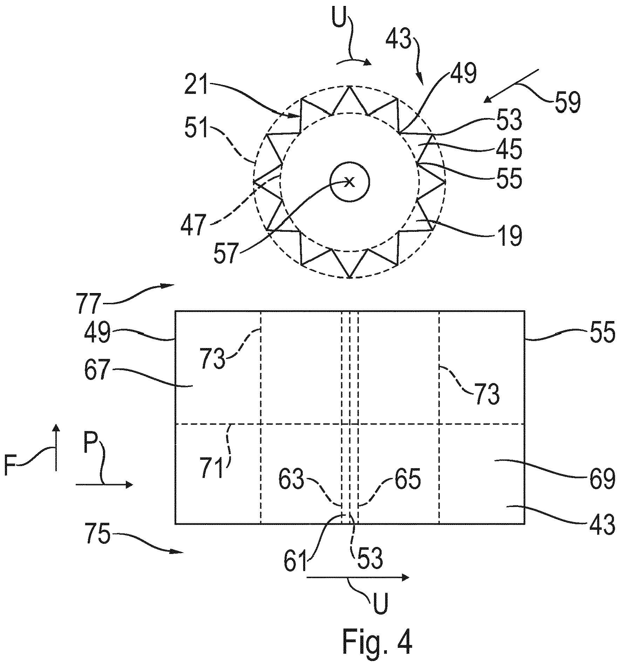

Figur 4 zeigt eine schematische Darstellung des ersten Referenzzahnrads 19 von dessen Oberfläche 21 das in Figur 3 dargestellte erste Referenzprofil 27 und das ebenfalls in Figur 3 dargestellte fünfte Referenzprofil 35 gemessen worden sind. Weiter zeigt Figur 4 einen Abschnitt 43 dieser Oberfläche 21. Der Abschnitt 43 der Oberfläche 21 ist durch eine Oberfläche eines Zahns 45 des ersten Referenzzahnrads 19 gebildet. Die Oberfläche des Zahns 45 erstreckt sich von einer einen Fußkreisdurchmesser 47 des ersten Referenzzahnrads 19 definierenden ersten Fußlinie 49 über eine einen Kopfkreisdurchmesser 51 des Referenzzahnrads 19 definierende Kopflinie 53 hin zu einer den Fußkreisdurchmesser 47 des Referenzzahnrads 19 definierenden zweiten Fußlinie 55. Die erste Fußlinie 49, die Kopflinie 53 und die zweite Fußlinie 55 erstrecken sich parallel zu der Drehachse 57 des ersten Referenzzahnrads 19. Der Abschnitt 43 ist in Figur 4 unten als Draufsicht entlang einer oben in Figur 4 als Pfeil dargestellten Sichtrichtung 59 dargestellt. Im Bereich der Kopflinie 53 weist der Abschnitt 43 eine in Figur 4 oben nicht dargestellte Kopffläche 61 auf, die sich in Richtung der Drehachse 57 zusammen mit der Kopflinie 53 parallel zur Drehachse 57 und in Umfangsrichtung U entlang des Kopfkreisdurchmessers 51 erstreckt. Die Kopffläche 61 erstreckt sich in Umfangsrichtung von einer links neben der Kopflinie 53 dargestellten gestrichelten ersten Linie 63 zu einer rechts neben der Kopflinie 53 dargestellten gestrichelten zweiten Linie 65. Die Kopffläche 61 teilt den Abschnitt 43 in eine erste Oberfläche 67 einer ersten Zahnflanke des Zahns 45 und in eine zweite Oberfläche 69 einer zweiten Zahnflanke des Zahns auf. Die erste Oberfläche 67 erstreckt sich von der ersten Fußlinie 49 hin zu der ersten Linie 63 und die zweite Oberfläche 69 erstreckt sich von der zweiten Linie 65 hin zu der zweiten Fußlinie 55. Der in Figur 4 unten dargestellte Abschnitt 43 ist für den in Figur 4 oben dargestellten Zahn 45 beispielhaft gezeigt. Jeder Zahn des ersten Referenzzahnrads 19 weist einen entsprechenden Abschnitt auf.

Wie bereits beschrieben sind das erste Referenzprofil 27 und das fünfte Referenzprofil 35 von der Oberfläche 21 des ersten Referenzzahnrads 19 gemessen. Hierfür wurde die Tastvorrichtung 7 so eingestellt, dass der Taster 9 mit seinem freien Ende mit dem Abschnitt 43 der Oberflächen 21 des ersten Referenzzahnrads 19 in Kontakt gebracht wurde und während das freie Ende des Tasters 9 mit dem Abschnitt 43 in Kontakt war, wurde das freie Ende entlang von in Figur 4 unten dargestellten Bahnen über den Abschnitt 43 bewegt.

Das freie Ende des Tasters 9 wurde zum Messen des erste Referenzprofils 27 entlang einer ersten Bahn 71 über den Abschnitt 43 des Zahns 45 bewegt. Die erste Bahn 71 erstreckt sich über die erste Oberfläche 67 der ersten Zahnflanke, die Kopffläche 61 und die zweite Oberfläche 69 der zweiten Zahnflanke des Referenzzahnrads 19. Die erste Bahn 71 erstreckt sich zumindest abschnittsweise entlang der ersten Oberfläche 67 der ersten Zahnflanke von der ersten Fußlinie 49 zu der ersten Linie 63 und entlang der zweiten Oberfläche 69 der zweiten Zahnflanke von der zweiten Linie 65 zu der zweiten Fußlinie 55. Diese Erstreckungen der ersten Bahn 71 gewährleistet, dass das erste Referenzprofil 27 zumindest abschnittsweise in Profilrichtung P gemessen wurde. Diese Erstreckungen der ersten Bahn 71 kann als im Wesentlichen senkrecht zur Drehachse verlaufende Erstreckung bezeichnet werden. Die erste Bahn 71 erstreckt sich im Wesentlichen senkrecht zur Drehachse des Referenzzahnrads 19.

Weiter wurde das freie Ende des Tasters 9 zum Messen des fünften Referenzprofils 35 entlang einer zweiten Bahn 73 bewegt. Die zweite Bahn 73 erstreckt sich über die erste Oberfläche 67 der ersten Zahnflanke und die zweite Oberfläche 69 der zweiten Zahnflanke des ersten Referenzzahnrads 19. Die zweite Bahn 73 erstreckt sich abschnittsweise von einer ersten Seite 75 des ersten Referenzzahnrads 19 im Wesentlichen parallel zur Drehachse 57 zu einer der ersten Seite gegenüberliegenden zweiten Seite 77 des ersten Referenzzahnrads 19. Diese Erstreckungen der zweiten Bahn 73 gewährleistet, dass das fünfte Referenzprofil 35 zumindest abschnittsweise in Flankenrichtung F gemessen wurde. Diese Erstreckung der zweiten Bahn 73 kann als im Wesentlichen parallel zur Drehachse des ersten Referenzzahnrads 19 verlaufende Erstreckung bezeichnet werden. Die fünfte Bahn 79 erstreck sich im Wesentlichen parallel zur Drehachse des ersten Referenzzahnrads 19.

Die im Zusammenhang mit dem in Figur 4 dargestellten ersten Referenzzahnrad 19 beschriebenen Merkmale, technischen Effekte und/oder Vorteile gelten zumindest in analoger Weise auch für alle anderen Referenzzahnräder 19 der Gruppe von Referenzzahnrädern 19, wie beispielsweise für das zweite Referenzzahnrad 19, das dritten Referenzzahnrad 19 und das vierte Referenzzahnrad 19. Insbesondere wurden für das zweite Referenzzahnrad 19, das dritten Referenzzahnrad 19 und das vierte Referenzzahnrad 19 das zweite Referenzprofil 29, das dritte Referenzprofil 31 und das vierte Referenzprofil 33 analog zum ersten Referenzprofil 27 und das sechste Referenzprofil 37, das siebte Referenzprofil 39 und das achte Referenzprofil 41 analog zum fünften Referenzprofil 35 gemessen.

Das computerimplementierte Verfahren sieht vor, dass zunächst ein Trainingsdatensatz erzeugt wird. Das Erzeugen des Trainingsdatensatzes umfasst für jedes Referenzzahnrad 19 das Messen der zwei Referenzprofile der Oberfläche 21 des Referenzzahnrades 19. Das Messen von zwei Referenzprofilen für jedes Referenzzahnrad 19 ist rein beispielhaft und es kann ebenso eine andere Anzahl von Referenzprofilen für jedes Referenzzahnrad 19 gemessen werden. Beispielsweise können acht Referenzprofile für jedes Referenzzahnrad 19 gemessen werden, wobei für jeden Zahn von vier Zähnen des Referenzzahnrads jeweils zwei der Referenzprofile gemessen werden. Alternativ zum Messen der zwei Referenzprofile für jedes Referenzzahnrad 19, können die zwei Referenzprofile für jedes Referenzzahnrad 19 auf eine andere Weise erfasst werden. Beispielsweise können die Referenzprofile für jedes Referenzzahnrad 19 eingelesen werden. Bevorzugt sind die Referenzprofile in elektronischer Form in dem Datenspeicher 15 gespeichert und werden von diesem durch den Prozessor 13 eingelesen. Weiter können die Referenzprofile auf Papier ausgedruckt vorliegen. Die ausgedruckten Referenzprofile können von der Scanvorrichtung 17 optisch erfasst werden und die optisch erfassten Referenzprofile können in elektronischer Form in dem Datenspeicher 15 gespeichert werden.

Ebenfalls sieht das computerimplementierte Verfahren vor, dass für jedes Referenzzahnrad 19 eine Zahnradkategorie bestimmt wird. Wie bereits beschrieben ist für jedes Referenzzahnrad 19 entweder die erste Zahnradkategorie 23 oder die zweite Zahnradkategorie 25 vorgesehen. Jedem Referenzzahnrad 19 der Gruppe, das in dem Getriebe eine Vibration gleich der oder oberhalb der Vibrationsschwelle hervorruft, ist die erste Zahnradkategorie 23 der Zahnradkategorien zugeordnet. Jedem Referenzzahnrad 19, das in dem Getriebe eine Vibration unterhalb der Vibrationsschwelle hervorruft, ist die zweite Zahnradkategorie 25 der Zahnradkategorien zugeordnet. Der Trainingsdatensatz der Gruppe von Referenzzahnrädern 19 weist für jedes Referenzzahnrad 19 der Gruppe das mindestens eine Referenzprofil der Oberfläche 21 des Referenzzahnrads 19 und eine Zahnradkategorie auf.

Wie bereits beschrieben ist eine erste Zahnradkategorie 23 und eine zweite Zahnradkategorie 25 vorgesehen. Wenn einem Referenzzahnrad 19 die erste Zahnradkategorie 23 zugeordnet ist, so ruft dieses Referenzzahnrad 19 in dem Getriebe eine Vibration gleich einer oder oberhalb der Vibrationsschwelle hervor. Dieses Referenzzahnrad 19 kann auch als fehlerhaftes Referenzzahnrad 19 bezeichnet werden. Die erste Zahnradkategorie 23 weist bevorzugt weitere Unterkategorien auf, wie beispielsweise eine erste Unterkategorie und eine zweite Unterkategorie. Jede Unterkategorie der weiteren Unterkategorien kann einem konkreten Fehler des Referenzzahnrads zugeordnet sein. Beispielsweise kann die erste Unterkategorie jedem Referenzzahnrad 19 zugeordnet sein, dessen Rauheit oberhalb einer Rauheitsschwelle ist. Beispielsweise kann die zweite Unterkategorie jedem Referenzzahnrad 19 zugeordnet sein, dessen Welligkeit oberhalb einer Welligkeitsschwelle ist. Weitere Unterkategorien können jedem Referenzzahnrad 19 zugeordnet sein, dessen Oberfläche 21 einen bestimmten Defekt aufweist. Beispielsweise kann eine dritte Unterkategorie vorgesehen sein, die jedem Referenzzahnrad 19 zugeordnet ist, dessen Oberfläche 21 aufgrund eines Schleifscheibenbruches beschädigt ist. Mithilfe der Unterkategorien können jedem Referenzzahnrad 19 unterschiedliche Fehlerklassen zugeordnet werden, wobei jede Unterkategorie einer Fehlerklasse entspricht. Bevorzugt kann jedem Referenzzahnrad 19 dann mindestens eine Unterkategorie zugeordnet sein, wenn dem entsprechenden Referenzzahnrad 19 die erste Zahnradkategorie zugeordnet ist. Wenn einem Referenzzahnrad 19 die zweite Zahnradkategorie 25 zugeordnet ist, so ruft dieses Referenzzahnrad 19 in dem Getriebe eine Vibration unterhalb der Vibrationsschwelle hervor. Dieses Referenzzahnrad 19 kann auch als fehlerfreies Referenzzahnrad 19 bezeichnet werden.

Weiter sieht das computerimplementierte Verfahren vor, dass ein generisches KI-Modell mithilfe des Trainingsdatensatzes der Gruppe von Referenzzahnrädern 19 trainiert wird. Wie bereits beschrieben umfasst der Trainingsdatensatz für jedes Referenzzahnrad 19 das mindestens eine Referenzprofil sowie eine der beiden Zahnradkategorien sowie gegebenenfalls eine oder mehrere Unterkategorien. Jedes Referenzzahnrad 19 stellt somit eine Verbindung zwischen mindestens einem entsprechenden Referenzprofil und einer entsprechenden Zahnradkategorie her. Das generische KI-Modell wird anhand dieser Verbindungen der Referenzzahnräder 19 trainiert, sodass das trainierte KI-Modell jedem Zahnrads 5, das kein Referenzzahnrad 19 ist, eine Zahnradkategorie der Zahnradkategorien zuordnen.

Weiter sieht das computerimplementierte Verfahren vor, dass ein erstes Profil und ein zweites Profil einer Oberfläche 11 eines Zahnrads 5 erfasst wird, wobei es sich bei dem Zahnrad 5 um ein Zahnrad 5 handelt, bei dem geprüft werden soll, ob das Zahnrad 5 aller Voraussicht nach in dem Getriebe, für das es vorgesehen ist, Vibrationen hervorruft. Insbesondere ist vorgesehen, dass mindestens ein Profil der Oberfläche 11 des Zahnrads 5 erfasst wird. Bevorzugt entspricht die Art des Zahnrads 5 der Art der Referenzzahnräder 19. Wenn das Zahnrad 5 ein Stirnrad ist, dann sind die Referenzzahnräder 19 bevorzugt Stirnräder. Wenn das Zahnrad 5 ein Kegelrad ist, dann sind die Referenzzahnräder 19 bevorzugt Kegelräder. Insbesondere ist bevorzugt, dass das Zahnrad 5 und die Referenzzahnräder 19 baugleich sind. Die im Zusammenhang mit dem in Figur 4 dargestellten ersten Referenzzahnrad 19 beschriebenen Merkmale, technischen Effekte und/oder Vorteile gelten zumindest in analoger Weise auch für das Zahnrad 5. Insbesondere werden für das Zahnrad 5 das erste Profil analog zum ersten Referenzprofil 27 und das zweite Profil analog zum fünften Referenzprofil 35 gemessen. Das Erfassen des ersten Profils und das Erfassen des zweiten Profils umfasst ein Erfassen des Profils der Oberfläche 11 des Zahnrads 5 entlang einer ersten Zahnflanke eines Zahns des Zahnrads 5 und entlang einer zweiten Zahnflanke des Zahns des Zahnrads 5. Das erste Profil wird nämlich entlang einer sich im Wesentlichen senkrecht zur Drehachse des Zahnrads 5 erstreckenden Bahn erfasst, die auf dem Zahn des Zahnrads 5 analog zu der in Figur 4 dargestellten ersten Bahn 71 verläuft. Das zweite Profil wird entlang einer sich im Wesentlichen parallel zur Drehachse des Zahnrads 5 erstreckenden Bahn erfasst, die auf dem Zahn des Zahnrads 5 analog zu der in Figur 4 dargestellten zweiten Bahn 73 verläuft.

Anhand des erfassten ersten Profils und anhand des erfassten zweiten Profils wird dem Zahnrad 5 durch das trainierte KI-Modell eine Zahnradkategorie der Zahnradkategorien zugeordnet. Anhand der dem Zahnrad 5 zugeordneten Zahnradkategorie kann geschlussfolgert werden, ob das Zahnrad 5 fehlerfrei ist. Insbesondere dann, wenn dem Zahnrad 5 die erste Zahnradkategorie 23 zugeordnet wird, kann geschlussfolgert werden, dass das Zahnrad 5 in dem Getriebe eine Vibration gleich einer oder oberhalb der Vibrationsschwelle hervorrufen wird, wenn es in das Getriebe eingebaut wird. Ebenso kann dann, wenn dem Zahnrad 5 die zweite Zahnradkategorie 25 zugeordnet wird, kann geschlussfolgert werden, dass das Zahnrad 5 in dem Getriebe eine Vibration unterhalb der Vibrationsschwelle hervorrufen wird, wenn es in das Getriebe eingebaut wird.

Da das generische KI-Modell mithilfe eines Trainingsdatensatzes trainiert wird, der Referenzprofile und Zahnradkategorien umfasst und das trainierte KI-Modell dem Zahnrad 5 anhand des erfassten Profils eine Zahnradkategorie zuordnet, geht das vorliegende Verfahren über die aus dem Stand der Technik bekannten Prüfverfahren zur Prüfung von Zahnrädern hinaus, bei denen die Zahnräder beispielsweise geometrisch vermessen werden und gemessene Ist-Werte mit vorgegebenen Soll-Werten verglichen werden und ein Zahnrad dann für fehlerfrei befunden wird, wenn die Ist-Werte innerhalb vorgegebener Toleranzen den Soll-Werten entsprechen und ein Zahnrad dann für fehlerhaft befunden wird, wenn die Ist-Werte stärker als die vorgegebenen Toleranzen von den Soll-Werten abweichen. Versuchsreihen mit dem trainierten KI-Modell haben zu dem überraschenden Ergebnis geführt, dass mithilfe der Zuordnung der Zahnradkategorie zu dem Zahnrad 5 durch das trainierte KI-Modell wesentlich zuverlässigere Aussagen über den Zustand des Zahnrads 5 getroffen werden als dies mit den aus dem Stand der Technik bekannten Prüfverfahren von Zahnrädern der Fall ist. Insbesondere konnten mithilfe des trainierten KI-Modells zuverlässig Zahnräder identifiziert werden, die in dem Getriebe eine Vibration gleich einer oder oberhalb der Vibrationsschwelle hervorrufen bevor diese Zahnräder in das Getriebe eingebaut wurden. Die zuverlässige Identifikation von solchen Zahnrädern reduziert die durchschnittliche Herstellungsdauer von Getrieben, da die Wahrscheinlichkeit einer durch ein Zahnrad hervorgerufenen Vibration gleich der oder oberhalb der Vibrationsschwelle deutlich reduziert werden kann, da die als fehlerhaft identifizierten Zahnräder nicht in das Getriebe eingebaut werden und somit die Anzahl der Getriebe in einer Gruppe mit einer festen Anzahl von Getrieben erhöht werden kann, die nicht durch ein fehlerhaftes Zahnrad selbst fehlerhaft sind. Außerdem gewährleistet die zuverlässige Identifikation von fehlerhaften Zahnrädern, dass durch fehlerhafte Zahnräder hervorgerufene Fehleranalysen von Getrieben vermieden werden oder zumindest die Häufigkeit deren Vorkommens deutlich reduziert werden kann.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichen

- 1: Vorrichtung
- 3: Haltevorrichtung
- 5: Zahnrad
- 7: Tastvorrichtung
- 9: Taster
- 11: Oberfläche eines Zahnrads
- 13: Prozessor
- 15: Datenspeicher
- 17: Scanvorrichtung
- 19: Referenzzahnrad
- 21: Oberfläche eines Referenzzahnrads
- 23: erste Zahnradkategorie
- 25: zweite Zahnradkategorie
- 27: erstes Referenzprofil
- 29: zweites Referenzprofil
- 31: drittes Referenzprofil
- 33: viertes Referenzprofil
- 35: fünftes Referenzprofil
- 37: sechstes Referenzprofil
- 39: siebtes Referenzprofil
- 41: achtes Referenzprofil
- 43: Abschnitt der Oberfläche eines Referenzzahnrads
- 45: Zahn eines Referenzzahnrads
- 47: Fußkreisdurchmesser
- 49: erste Fußlinie
- 51: Kopfkreisdurchmesser
- 53: Kopflinie
- 55: zweite Fußlinie
- 57: Drehachse eines Referenzzahnrads
- 59: Sichtrichtung
- 61: Kopffläche
- 63: erste Linie
- 65: zweite Linie
- 67: erste Oberfläche einer ersten Zahnflanke
- 69: zweite Oberfläche einer zweiten Zahnflanke
- 71: erste Bahn
- 73: zweite Bahn
- 75: erste Seite des Referenzzahnrads
- 77: zweite Seite des Referenzzahnrads

## Patentansprüche

1. Computerimplementiertes Verfahren zum Identifizieren eines Zahnrads (5), das in einem Getriebe Vibrationen hervorruft, wobei das Verfahren folgende Schritte umfasst:
Trainieren eines generischen KI-Modells mithilfe eines Trainingsdatensatzes einer Gruppe von Referenzzahnrädern (19), wobei für jedes Referenzzahnrad (19) der Gruppe mindestens ein Referenzprofil der Oberfläche (21) des Referenzzahnrads (19) und eine Zahnradkategorie vorgesehen ist, wobei jedem Referenzzahnrad (19) der Gruppe, das in dem Getriebe eine Vibration gleich einer oder oberhalb der Vibrationsschwelle hervorruft, eine erste Zahnradkategorie (23) der Zahnradkategorien zugeordnet ist und jedem Referenzzahnrad (19), das in dem Getriebe eine Vibration unterhalb der Vibrationsschwelle hervorruft, eine zweite Zahnradkategorie (25) der Zahnradkategorien zugeordnet ist, wobei das trainierte KI-Modell jedem Zahnrad (5) eine Zahnradkategorie der Zahnradkategorien zuordnen kann;
Erfassen eines Profils einer Oberfläche (11) eines Zahnrads (5); und
Zuordnen einer der Zahnradkategorien zu dem Zahnrad (5) anhand des erfassten Profils durch das trainierte KI-Modell.

2. Verfahren nach einem der vorhergehenden Ansprüche, wobei das Verfahren folgende Schritte umfasst: Erzeugen des Trainingsdatensatzes, wobei das Erzeugen des Trainingsdatensatzes für jedes Referenzzahnrad (19) folgende Schritte umfasst: Erfassen des mindestens einen Referenzprofils der Oberfläche (21) des Referenzzahnrades (19); und Bestimmen der Zahnradkategorie.

3. Verfahren nach einem der vorhergehenden Ansprüche, wobei das Erfassen des Profils der Oberfläche (11) des Zahnrads (5) umfasst: Erfassen des Profils der Oberfläche (11) des Zahnrads (5) entlang einer Zahnflanke eines Zahns des Zahnrads (5).

4. Verfahren nach einem der vorhergehenden Ansprüche, wobei das Erfassen des Profils der Oberfläche (11) des Zahnrads (5) umfasst: Erfassen des Profils der Oberfläche (11) des Zahnrads (5) entlang einer sich im Wesentlichen senkrecht zur Drehachse des Zahnrads (5) erstreckenden Bahn.

5. Verfahren nach einem der vorhergehenden Ansprüche, wobei das Erfassen des Profils der Oberfläche (11) des Zahnrads (5) umfasst: Erfassen des Profils der Oberfläche (11) des Zahnrads (5) entlang einer sich im Wesentlichen parallel zur Drehachse des Zahnrads (5) erstreckenden Bahn.

6. Vorrichtung zum Identifizieren eines Zahnrads (5), das in einem Getriebe Vibrationen hervorruft mit Mitteln, die angepasst sind, die Schritte eines Verfahrens nach einem der vorhergehenden Ansprüche auszuführen.

7. Computerprogramm, umfassend Befehle, die bewirken, dass die Vorrichtung nach Anspruch 6 die Schritte des Verfahrens nach einem der Ansprüche 1 bis 5 ausführt.

8. Computerlesbares Medium, auf dem das Computerprogramm nach Anspruch 7 gespeichert ist.
